# EUROPEAN PATENT APPLICATION

(11) **EP 3 705 720 A1**
(43) Date of publication of application: **09.09.2020**
(21) Application number: 18873240.8
(22) Date of filing: 02.10.2018
(51) Int. Cl.: F03G 6/00, F01K 3/02, F01K 3/12

(54) **SOLAR THERMAL POWER GENERATION SYSTEM**

(30) Priority: 31.10.2017 JP 2017211240
(71) Applicant: Mitsubishi Hitachi Power Systems, Ltd., Yokohama-shi, Kanagawa 220-8401 (JP)
(72) Inventor: SHINOZAKI, Kohei, Yokohama-shi Kanagawa 220-8401 (JP); MARUMOTO, Takahiro, Yokohama-shi Kanagawa 220-8401 (JP); TADAKUMA, Satoshi, Yokohama-shi Kanagawa 220-8401 (JP); SHIKATA, Tetsuo, Yokohama-shi Kanagawa 220-8401 (JP)
(74) Representative: Hoffmann Eitle
(86) International application number: PCT/JP2018/036937
(87) International publication number: WO 2019/087657

(57) **Abstract**

The present invention prevents the flow of a fluid flowing through a high-temperature heat storage device and a low-temperature heat storage device from becoming a water-steam two phase flow. A solar thermal power generation system is provided with: a low-temperature heat collection device (1); a steam separator (2); a first hot water line (L2) that feeds water separated by a steam separator to the low-temperature heat collection device; a low-temperature heat storage device (4) provided in the first hot water line; a high-temperature heat collection device (3); a steam turbine (6); a first main steam line (L7) that feeds superheated steam to the steam turbine; a second main steam line (L8) that branches from the first main steam line and joins with the first main steam line; a high-temperature heat storage device (5) provided in the second main steam line; a low-temperature bypass line (L5) that bypasses the low-temperature heat collection device and connects an outlet-side of the low-temperature heat storage device to a water-steam two phase fluid inlet-side of the steam separator; and a high-temperature bypass line (L9) that bypasses the high-temperature heat collection device and connects a steam outlet-side of the steam separator to an inlet-side of the high-temperature heat storage device.

## Description

### Technical Field

The present invention relates to a solar thermal power generation system that utilizes solar heat to generate power.

### Background Art

Heretofore, a storage-type solar thermal power generation plant is known in which sunlight is used in the daytime to generate steam, a part of heat of the steam is stored in a heat storage device, the heat stored in the heat storage device during night or cloudy weather is released to generate steam from water, and a steam turbine is turned with the steam to generate power.

For example, Patent Document 1 describes the configuration of a storage-type solar thermal power generation system, in which heat of steam from a second heat collector (also referred to as a superheater or a high-temperature heat collection device) 1108 is stored in a heat storage system 912, and is then phase-changed into water, the water is pressurized by a pump 1112 and a pump 1110, and the pressurized water is returned to a circulation line including a first heat collector (also referred to as an evaporator or a low-temperature heat collection device) 1102 (see FIG. 12). In the solar thermal power generation system described in Patent Document 1, the steam from the second heat collector 1108 turns into a water-steam two phase flow before a phase change thereof into water in a process of sequentially flowing through a high-temperature heat storage device 1116 and a low-temperature heat storage device 1120.

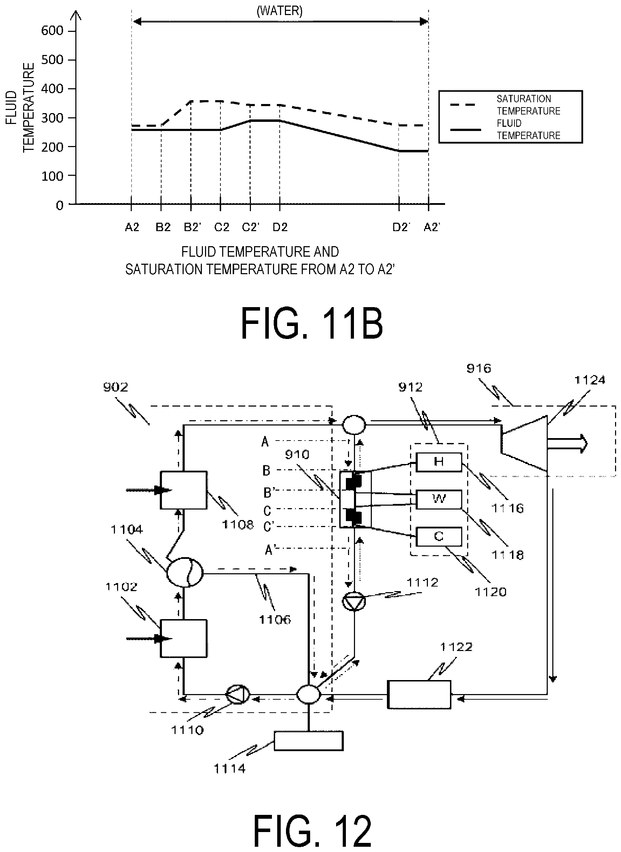

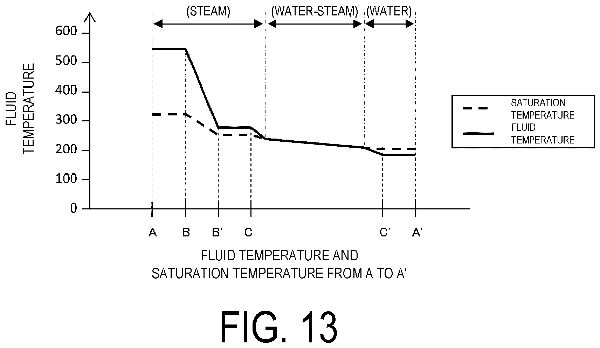

This will be described in greater detail with reference to figures. FIG. 12 is a configuration diagram of the solar thermal power generation system according to the prior art described in Patent Document 1, and FIG. 13 is a diagram illustrating fluid temperatures of the heat storage system illustrated in FIG. 12. In FIG. 12, A denotes a predetermined position on an inlet-side of the heat storage system 912, A' denotes a predetermined position on an outlet-side of the heat storage system 912, B denotes an inlet of the high-temperature heat storage device 1116, B' denotes an outlet of the high-temperature heat storage device 1116, C denotes an inlet of the low-temperature heat storage device 1120, and C' denotes an outlet of the low-temperature heat storage device 1120. A, B, C and the like illustrated in the horizontal axis in FIG. 13 correspond to positions of A, B, C and the like in FIG. 12, and in FIG. 13, a dotted line represents saturation temperatures and a solid line represents fluid temperatures. Note that in FIG. 13, a pressure loss of piping connecting apparatuses is ignored.

As illustrated in FIG. 13, from the position A to the position C, the fluid temperatures exceed the saturation temperatures, and this indicates that the fluid is steam. At a position slightly away from the position C toward the position A', the fluid temperatures become equal to the saturation temperatures, and in general, from the position C to the position C', the fluid temperatures are equal to the saturation temperatures. This indicates that the inside of the low-temperature heat storage device 1120 is in a state of a water-steam two phase flow (water-steam two phase fluid), under which water and steam coexist. From the position C' to the position A', the fluid temperatures fall below the saturation temperatures. Thus, the fluid flowing in the tube downstream from the outlet of the low-temperature heat storage device 1120 is water. As described above, in Patent Document 1, since the fluid flowing through the heat storage system 912 is placed in the state of the water-steam two phase flow in the process of phase change, it is needed to take into account this water-steam two phase flow when designing the heat storage system 912.

### Citation List

### Patent Document

Patent Document 1: US 2013/0,307,273 A

### Summary of Invention

### Technical Problem

However, the water-steam two phase flow is known to have heat transfer fluidization property that is more complex than that of a single phase flow, hence, there is a problem in that designing the heat storage device (heat storage system) becomes more difficult due to the need to predict the behavior of the water-steam two phase flow.

Furthermore, in the solar thermal power generation system described in Patent Document 1, since the high-temperature heat storage device and the low-temperature heat storage device are connected in series, an heat storage amount has to be dependent on a flow rate of a steam from the second heat collector (superheater), hence, there is a problem in that the heat storage amount of the high-temperature heat storage device and the heat storage amount of the low-temperature heat storage device cannot be adjusted individually.

Therefore, an object of the present invention is to provide a solar thermal power generation system that can prevent the flow of a fluid flowing through a high-temperature heat storage device and a low-temperature heat storage device from becoming a water-steam two phase flow and can individually adjust a heat storage amount of the high-temperature heat storage device and a heat storage amount of the low-temperature heat storage device.

### Solution to Problem

In order to solve the problems described above, a solar thermal power generation system according to an aspect of the present invention includes: a low-temperature heat collection device configured to heat water with heat of sunlight thereby generating water-steam two phase fluid; a steam separator configured to separate the water-steam two phase fluid, which has been generated by the low-temperature heat collection device, into water and steam; a first hot water line configured to connect the steam separator to the low-temperature heat collection device, and feed the water separated by the steam separator to the low-temperature heat collection device; a low-temperature heat storage device provided in the first hot water line, and configured to store heat acquired through heat exchange with the water separated by the steam separator; a high-temperature heat collection device configured to heat the steam separated by the steam separator with heat of sunlight thereby generating superheated steam; a steam turbine; a first main steam line configured to connect the high-temperature heat collection device to the steam turbine, and feed the superheated steam generated by the high-temperature heat collection device to the steam turbine; a second main steam line branching from the first main steam line and joining with the first main steam line; a high-temperature heat storage device provided in the second main steam line, and configured to store heat acquired through heat exchange with the superheated steam generated by the high-temperature heat collection device; a low-temperature bypass line configured to bypass the low-temperature heat collection device, and connect an outlet-side of the low-temperature heat storage device to a water-steam two phase fluid inlet-side of the steam separator; and a high-temperature bypass line configured to bypass the high-temperature heat collection device, and connect a steam outlet-side of the steam separator to an inlet-side of the high-temperature heat storage device.

### Advantageous Effect of Invention

The solar thermal power generation system according to the present invention can prevent the fluid flowing through a high-temperature heat storage device and a low-temperature heat storage device from becoming a water-steam two phase flow, and can individually adjust the heat storage amount of the high-temperature heat storage device and the heat storage amount of the low-temperature heat storage device. Objects, configurations, and effects other than those described above will be apparent from the description of the embodiments described below.

### Brief Description of Drawings

FIG. 1 is a configuration diagram of a solar thermal power generation system according to a first embodiment.
FIG. 2 is an explanatory diagram illustrating an operation of a heat storage operation mode of a solar thermal power generation plant according to the first embodiment.
FIG. 3 is an explanatory diagram illustrating an operation of a heat release operation mode of the solar thermal power generation plant according to the first embodiment.
FIG. 4A is a diagram illustrating fluid temperatures of a high-temperature heat storage device.
FIG. 4B is a diagram illustrating fluid temperatures of a circulation pump and a low-temperature heat storage device.
FIG. 5 is a configuration diagram of a solar thermal power generation plant according to a second embodiment.
FIG. 6 is an explanatory diagram illustrating an operation of a heat storage operation mode of the solar thermal power generation plant according to the second embodiment.
FIG. 7 is a configuration diagram of a solar thermal power generation plant according to a third embodiment.
FIG. 8 is an explanatory diagram illustrating an operation of a heat storage operation mode of the solar thermal power generation plant according to the third embodiment.
FIG. 9 is a configuration diagram of a solar thermal power generation plant according to a fourth embodiment.
FIG. 10 is an explanatory diagram illustrating an operation of a heat storage operation mode of the solar thermal power generation plant according to the fourth embodiment.
FIG. 11A is a diagram illustrating fluid temperatures of a high-temperature heat storage device.
FIG. 11B is a diagram illustrating fluid temperatures of a circulation pump, a second heat exchanger, and a low-temperature heat storage device.
FIG. 12 is a configuration diagram of a solar thermal power generation system according to the prior art.
FIG. 13 is a diagram illustrating fluid temperatures of the heat storage system illustrated in FIG. 12.

### Description of Embodiments

Embodiments of the present invention will be described below with reference to figures.

### First Embodiment

The configuration of a system including a low-temperature heat collection device and a high-temperature heat collection device as heat collection devices (heating devices) for heating an internal fluid with heat of sunlight will be described below. Note that the low-temperature heat collection device corresponds to an evaporator in a boiler, and serves to heat water with heat of sunlight to generate a water-steam two phase fluid. The high-temperature heat collection device corresponds to a superheater in the boiler, and serves to heat, by heat of sunlight, steam separated by a steam separator 2 described below, to generate superheated steam.

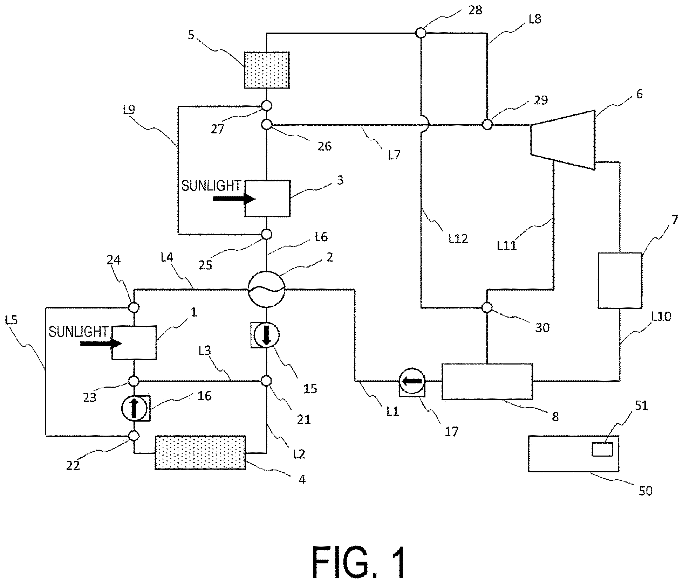

FIG. 1 is a schematic configuration diagram of a solar thermal power generation system according to a first embodiment of the present invention. As illustrated in FIG. 1, the solar thermal power generation system according to the first embodiment mainly includes: a low-temperature heat collection device 1 that heats water with heat of sunlight to generate a water-steam two phase fluid; a steam separator 2 constituted of a steam drum or the like that separates the water-steam two phase fluid, which is generated by the low-temperature heat collection device 1, into water and steam; a low-temperature heat storage device 4 that stores heat acquired through heat exchange with the water separated by the steam separator 2; a high-temperature heat collection device 3 that heats the steam, which results from separation by the steam separator 2, with heat of sunlight to generate superheated steam; a steam turbine 6 driven with the supplied superheated steam; and a high-temperature heat storage device 5 that stores heat acquired through heat exchange with the superheated steam generated by the high-temperature heat collection device 3.

The solar thermal power generation system illustrated in FIG. 1 further includes: a feed water pump 17 that feeds water to the steam separator 2 via a feed water line L1; a feed water heater 8 that is provided upstream of the feed water pump 17 and heats water to be fed to the feed water pump 17; a condenser 7 that is provided in a condensation line L10 connecting the steam turbine 6 to the feed water heater 8, and condenses steam discharged from the steam turbine 6 to water; a circulation pump 15 that pressurizes the water separated by the steam separator 2 and feeds the pressurized water to the low-temperature heat collection device 1 and the low-temperature heat storage device 4, and a pump 16 that pressurizes the water flowing through the low-temperature heat storage device 4 and pumps the pressurized water to the low-temperature heat collection device 1. Note that reference signs 21 to 30 each denote a three-way valve.

A water outlet of the steam separator 2 is connected to an inlet of the low-temperature heat collection device 1 by a first hot water line L2, and a circulation pump 15, a low-temperature heat storage device 4, and a pump 16 are provided in this first hot water line L2. Further, a steam inlet of the steam separator 2 is connected to an outlet of the low-temperature heat collection device 1 by a water-steam line L4. There are further provided: a second hot water line L3 that branches from the first hot water line L2 at a position of the three-way valve 21 located between an outlet of the circulation pump 15 and an inlet of the low-temperature heat storage device 4 in, and bypasses the low-temperature heat storage device 4 to feed the water separated by the steam separator 2 directly to the low-temperature heat collection device 1 via the three-way valve 23; and a low-temperature bypass line L5 that bypasses the low-temperature heat collection device 1 to connect the three-way valve 22 located on an outlet-side of the low-temperature heat storage device 4 to a three-way valve 24 located on a water-steam two phase fluid inlet-side of the steam separator 2.

A steam outlet of the steam separator 2 is connected to an inlet of the high-temperature heat collection device 3 by a saturated steam line L6, and an outlet of the high-temperature heat collection device 3 is connected to the steam turbine 6 by a first main steam line L7. The high-temperature heat storage device 5 is provided in a second main steam line L8 that branches from the first main steam line L7 at the three-way valve 26 provided in the first main steam line L7, and joins with the first main steam line L7 again at the three-way valve 29 provided in the first main steam line L7. There are further provided a high-temperature bypass line L9 that bypasses the high-temperature heat collection device 3 to connect the three-way valve 25 located on the steam outlet-side of the steam separator 2 to the three-way valve 27 located on an inlet-side of the high-temperature heat storage device 5.

There is further provided a steam extraction line L11 that connects a steam extraction side of the steam turbine 6 to the feed water heater 8, and a first steam return line L12 that connects the three-way valve 28 located on an outlet-side of the high-temperature heat storage device 5 to the three-way valve 30 provided in the steam extraction line L11.

Note that the three-way valves 21 to 30 are connected to a controller 50 via electrical wiring (not illustrated), and operation in a heat storage operation mode or operation in a heat release operation mode described below is performed according to a command from the controller 50. A configuration, in which switching between the heat storage operation mode and the heat release operation mode is performed by manual operation through the switching switch 51 provided on the controller 50, may be employed. Of course, a configuration, in which the operation mode is automatically switched based on an output signal from a temperature sensor, a pressure sensor, or the like (not illustrated), may be employed.

Here, in the present embodiment, if an example of the low-temperature heat collection device 1 and the high-temperature heat collection device 3 is given, the low-temperature heat collection device 1 may be a trough heat exchanger configured such that a heat transfer tube is disposed above a curved inner peripheral surface of a condensing mirror extending in a trough shape and sunlight is concentrated on the heat transfer tube by the condensing mirror, thereby heating water that circulates in the heat transfer tube and generating a water-steam two phase fluid, or a Fresnel heat exchanger configured such that a large number of substantially planar condensing mirrors are arranged, a heat transfer tube is disposed above the group of condensing mirrors, and sunlight is concentrated on the heat transfer tube by the group of condensing mirrors, thereby heating water that circulates in the heat transfer tube and generating a water-steam two phase fluid.

The high-temperature heat collection device 3 is, for example, a tower-type heat exchanger configured such that a heat transfer tube panel is installed on a tower having a predetermined height, a large number of condensing mirrors are mounted on the ground, and sunlight is concentrated on the heat transfer tube panel on the tower by using a group of condensing mirrors, thereby heating steam that circulates in the heat transfer tube and generating superheated steam.

In addition, in the present embodiment, a heat storage medium used in the low-temperature heat storage device 4 and the high-temperature heat storage device 5 is preferably a nitrate-based molten salt such as potassium nitrate or sodium nitrate. However, the heat storage medium may be a solid such as concrete or the like, and may be any type of heat storage medium that is compatible temperatures appropriate for usage.

Next, the operation modes of the solar thermal power generation system according to the present embodiment will be described. In the present embodiment, the heat storage operation mode and the heat release operation mode are provided.

### Heat Storage Operation Mode

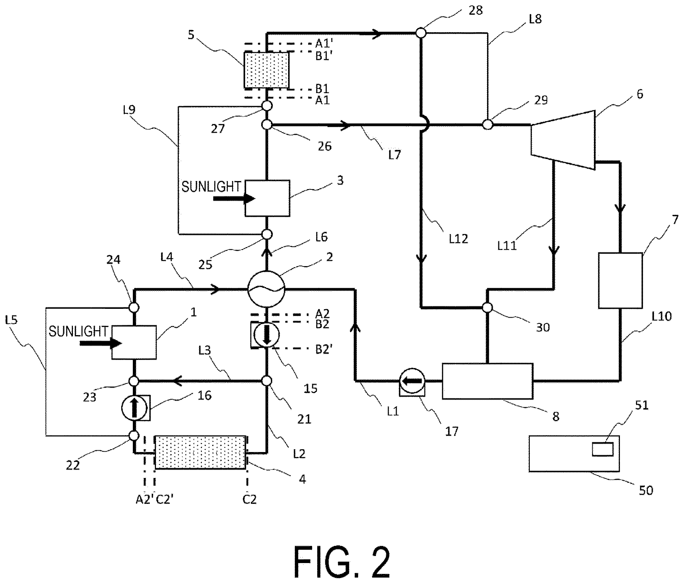

FIG. 2 is an explanatory diagram illustrating the operation of the heat storage operation mode of the solar thermal power generation plant according to the first embodiment. Note that in FIG. 2, lines in which the fluid flows are thicker, and arrows on the lines indicate the flow direction of the fluid.

As illustrated in FIG. 2, water fed from the feed water pump 17 to the steam separator 2 or water separated by the steam separator 2 is pressurized by the circulation pump 15, and the pressurized water flows through the first hot water line L2 and sent to the low-temperature heat storage device 4. The water (hot water) fed to the low-temperature heat storage device 4 exchanges heat with the heat storage medium in the low-temperature heat storage device 4 and releases heat to the heat storage medium. Then, by the pump 16 the water is supplemented for a pressure loss in the low-temperature heat storage device 4, and sent to the low-temperature heat collection device 1. Furthermore, a portion of the water flowing through the first hot water line L2 is diverted in front of the low-temperature heat storage device 4, and is sent to the low-temperature heat collection device 1 via the second hot water line L3.

In the low-temperature heat collection device 1, water is heated by solar heat to generate a water-steam two phase fluid. The generated water-steam two phase fluid flows through the water-steam line L4 and is introduced into the steam separator 2, and then, is separated into water and saturated steam by the steam separator 2. Saturated steam separated by the steam separator 2 is introduced into the high-temperature heat collection device 3 via the saturated steam line L6. On the other hand, the water separated by the steam separator 2 increases water temperature in the steam separator 2. Heat acquired by this increase in water temperature is stored in the low-temperature heat storage device 4. That is, water circulates through the steam separator 2, the low-temperature heat storage device 4, the low-temperature heat collection device 1, and the steam separator 2 in this order, and as a result heat of the water heated by the low-temperature heat collection device 1 is stored in the low-temperature heat storage device 4.

The saturated steam sent from the steam separator 2 to the high-temperature heat collection device 3 is further heated with solar heat to become superheated steam. The superheated steam generated by the high-temperature heat collection device 3 flows through the first main steam line L7 and is fed to the steam turbine 6, whereby the steam turbine 6 is driven. As the steam turbine 6 is driven, a generator not illustrated generates power.

Further, a portion of the superheated steam generated by the high-temperature heat collection device 3 is sent to the high-temperature heat storage device 5, and exchanges heat with heat that is stored in the heat storage medium in the high-temperature heat storage device 5, hence, the heat is stored in the high-temperature heat storage device 5. The superheated steam after heat exchange in the high-temperature heat storage device 5 passes through the second main steam line L8 and then the first steam return line L12, and joins with the steam extraction line 11, and thereafter, is introduced into the feed water heater 8. In the feed water heater 8, the water that has flowed through the condensation line L10 exchanges heat with the extracted steam that has flowed through the steam extraction line L11, thereby heating water to be fed to the feed water pump 17.

### Heat Release Operation Mode

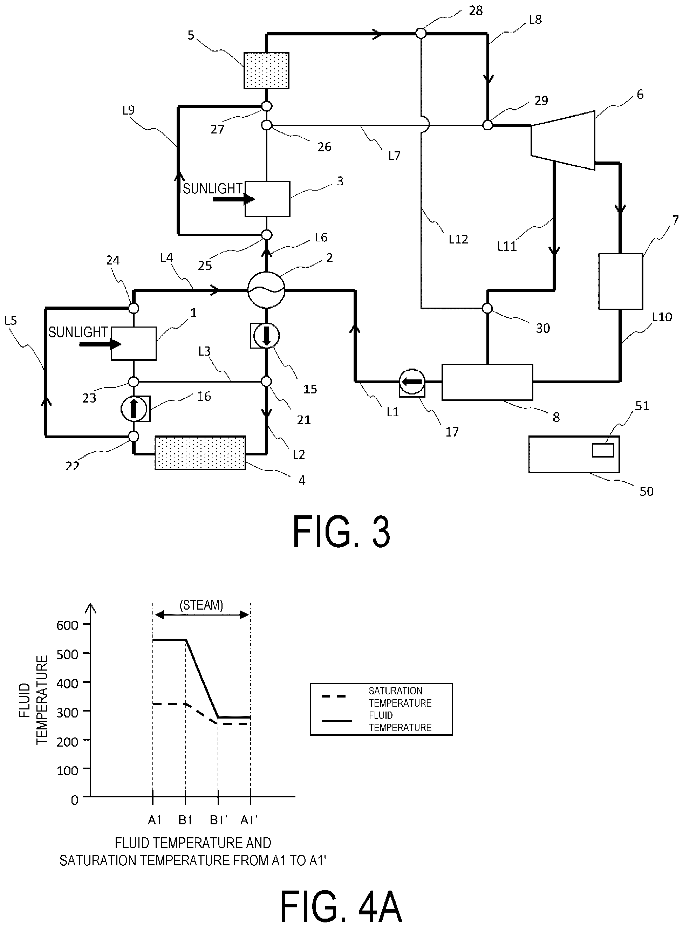

FIG. 3 is an explanatory diagram of the operation of the heat release operation mode of the solar thermal power generation plant according to the first embodiment. Note that in FIG. 3, lines in which the fluid flows are thicker, and arrows on the lines indicate the flow direction of the fluid.

As illustrated in FIG. 3, water supplied from the feed water pump 17 to the steam separator 2 or water separated by the steam separator 2 is pressurized by the circulation pump 15, and flows through the first hot water line L2 and is sent to the low-temperature heat storage device 4. The water fed to the low-temperature heat storage device 4 is heated by the heat storage medium in the low-temperature heat storage device 4 to become a water-steam two phase fluid, and is introduced into the steam separator 2 via the low-temperature bypass line L5.

The saturated steam separated by the steam separator 2 is sent to the high-temperature heat storage device 5 via the high-temperature bypass line L9. The saturated steam fed to the high-temperature heat storage device 5 is heated by the heat storage medium in the high-temperature heat storage device 5 to become superheated steam, and is fed to the steam turbine 6 via the second main steam line L8. Note that the flow downstream of the steam turbine 6 is the same as that in the heat storage operation mode, and thus descriptions thereof will be omitted.

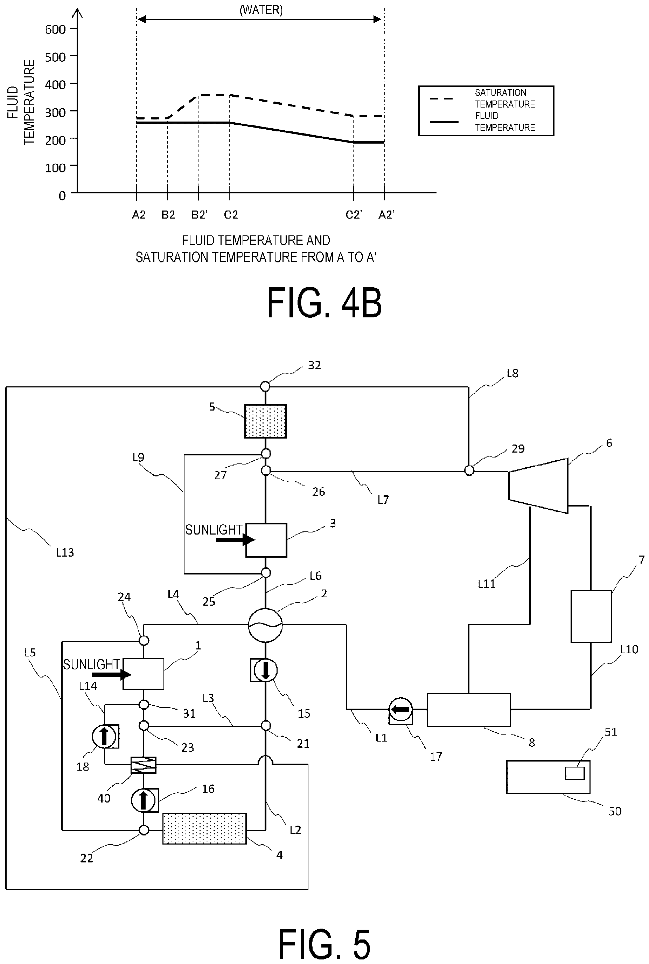

Next, the fluid temperatures of the low-temperature heat storage device 4 and the high-temperature heat storage device 5 in the heat storage operation mode will be described. FIG. 4A is a diagram illustrating the fluid temperatures of the high-temperature heat storage device 5, and FIG. 4B is a diagram illustrating the fluid temperatures of the circulation pump 15 and the low-temperature heat storage device 4. Note that A1, B1, C2 and the like illustrated in the horizontal axes in FIG. 4A and FIG. 4B correspond to positions of A1, B1, C2 and the like in FIG. 2, and in FIG. 4A and FIG. 4B, dotted lines represent the saturation temperatures and solid lines represent the fluid temperatures. Note that in FIG. 4A and FIG. 4B, a pressure loss of piping connecting apparatuses is ignored.

As illustrated in FIG. 4A, from the position B1 to B1', the fluid temperature of the superheated steam flowing in the tube of the high-temperature heat storage device 5 decreases, because heat is deprived by the heat storage medium of the high-temperature heat storage device 5. However, the saturation temperature also decreases simultaneously, thereby keeping a state in which the fluid temperature is higher than the saturation temperature. As a result, the fluid remains as steam from the position A1 on the inlet-side to the position A1 'on the outlet-side of the high-temperature heat storage device 5. That is, the fluid in the high-temperature heat storage device 5 is a single phase flow.

On the other hand, as illustrated in FIG. 4B, on the side of the low-temperature heat storage device 4, from the position B2 to the position B2', water from the steam separator 2 is pressurized by the circulation pump 15, and, accordingly, the saturation temperature increases. The pressurized water is fed to the inlet of the low-temperature heat storage device 4, and from the position C2 to the position C2', heat is deprived by the heat storage medium of the low-temperature heat storage device 4. As a result, from the position C2 to the position C2', the fluid temperature decreases. While the saturation temperature also decreases due to the pressure loss of the low-temperature heat storage device 4, the fluid temperature is maintained to be lower than the saturation temperature at all times, hence, the fluid remains as water. That is, the fluid in the low-temperature heat storage device 4 is a single phase flow.

As described above, according to the solar thermal power generation system according to the present embodiment, heat of the superheated steam generated by the high-temperature heat collection device 3 is stored only by the high-temperature heat storage device 5, and heat of the hot water separated by the steam separator 2 is stored only by the low-temperature heat storage device 4. Therefore, the fluid flowing through each of the high-temperature heat storage device 5 and the low-temperature heat storage device 4 can be prevented from becoming a water-steam two phase flow. For this reason, when designing the high-temperature heat storage device 5 and the low-temperature heat storage device 4, it is no longer necessary to take into account the water-steam two phase fluid, whereby device designing can be simplified. In addition, according to the present embodiment, since a configuration is provided, in which the high-temperature heat storage device 5 and the low-temperature heat storage device 4 are not arranged in series, the heat storage amount of the high-temperature heat storage device 5 and the heat storage amount of the low-temperature heat storage device 4 can be individually adjusted.

Here, as described above, in the prior art illustrated in FIG. 12, the heat storage amount of the high-temperature heat storage device 1116 and the heat storage amount of the low-temperature heat storage device 1120 cannot be individually adjusted, hence, for example, steam that has not been condensed fully by the low-temperature heat storage device 1120 may be fed to the pump 1112, whereby the pump 1112 may be damaged by erosion. In addition, high-temperature steam may be fed from the high-temperature heat storage device 1116 to the low-temperature heat storage device 1120, whereby piping and the like of the low-temperature heat storage device 1120 may be damaged. In contrast, in the present embodiment, since the heat storage amount of the high-temperature heat storage device 5 and the heat storage amount of the low-temperature heat storage device 4 can be individually adjusted, the above-mentioned damage may be prevented.

### Second Embodiment

FIG. 5 is a configuration diagram of a solar thermal power generation plant according to a second embodiment of the present invention. The second embodiment illustrated in FIG. 5 is different from the first embodiment in that a first heat exchanger 40 that heats water flowing through the low-temperature heat storage device 4 is provided between the outlet of the low-temperature heat storage device 4 and the inlet of the low-temperature heat collection device 1 in the first hot water line L2, and there are further provided: a second steam return line L13 that connects the first heat exchanger 40 to the outlet-side of the high-temperature heat storage device 5 via a three-way valve 32; and a first condensed water feed line L14 that pressurizes, by using the pressurization pump 18, water, which flows from the high-temperature heat storage device 5 through the second steam return line L13 and which is condensed through heat exchange with the water flowing through the low-temperature heat storage device 4 by the first heat exchanger 40, and feeds the condensed water to the low-temperature heat collection device 1 via a three-way valve 31. In the second embodiment, since the second steam return line L13 is provided, the first steam return line L12 in the first embodiment is omitted.

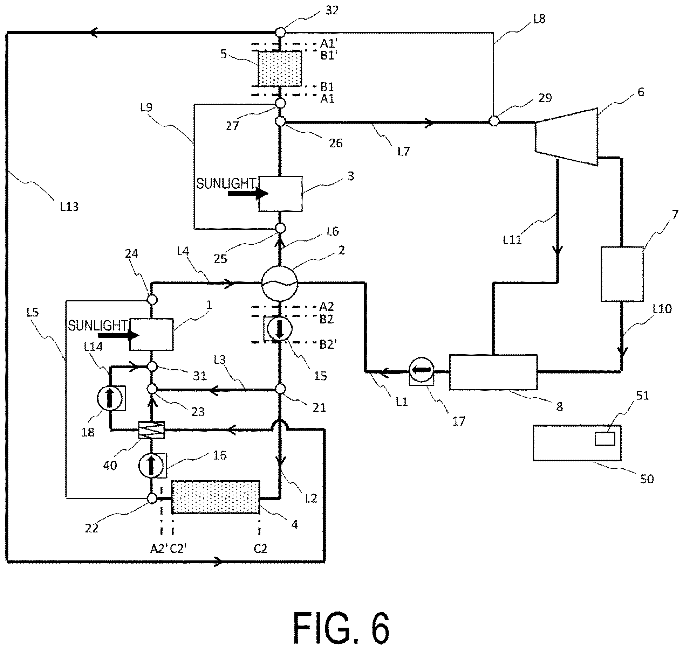

Next, the operation mode of the solar thermal power generation plant according to the second embodiment will be described. However, the heat release operation mode is the same as that of the first embodiment and thus, only the heat storage operation mode will be described below. FIG. 6 is an explanatory diagram illustrating the operation of the heat storage operation mode of the solar thermal power generation plant according to the second embodiment. Note that in FIG. 6, lines in which the fluid flows are thicker, and arrows on the lines indicate the flow direction of the fluid.

As illustrated in FIG. 6, water supplied from the feed water pump 17 to the steam separator 2 or water separated by the steam separator 2 is pressurized by the circulation pump 15, and flows through the first hot water line L2 and is sent to the low-temperature heat storage device 4. The water (hot water) fed to the low-temperature heat storage device 4 exchanges heat with the heat storage medium in the low-temperature heat storage device 4 to release heat to the heat storage medium. After that, the water is supplemented for a pressure loss in the low-temperature heat storage device 4 by the pump 16, and is further pressurized and then, sent to the low-temperature heat collection device 1 via the first heat exchanger 40. Furthermore, a portion of the water flowing through the first hot water line L2 is diverted in front of the low-temperature heat storage device 4, and is sent to the low-temperature heat collection device 1 via the second hot water line L3.

In the low-temperature heat collection device 1, water is heated with solar heat to produce a water-steam two phase fluid. The generated water-steam two phase fluid flows through the water-steam line L4 and is introduced into the steam separator 2, and the water-steam two phase fluid is separated into water and saturated steam by the steam separator 2. Saturated steam separated by the steam separator 2 is introduced into the high-temperature heat collection device 3 via the saturated steam line L6. On the other hand, water separated by the steam separator 2 increases the water temperature in the steam separator 2. Heat used for this increase in water temperature is stored in the low-temperature heat storage device 4. That is, water circulates through the steam separator 2, the low-temperature heat storage device 4, the first heat exchanger 40, the low-temperature heat collection device 1, and the steam separator 2 in this order, and as a result heat of the water heated by the low-temperature heat collection device 1 is stored in the low-temperature heat storage device 4.

The saturated steam sent from the steam separator 2 to the high-temperature heat collection device 3 is further heated with solar heat to become superheated steam. The superheated steam generated by the high-temperature heat collection device 3 flows through the first main steam line L7 and is fed to the steam turbine 6, whereby the steam turbine 6 is driven. As the steam turbine 6 is driven, a generator not illustrated generates power.

Further, a portion of the superheated steam generated by the high-temperature heat collection device 3 is sent to the high-temperature heat storage device 5, and exchanges heat with heat that is stored in the heat storage medium in the high-temperature heat storage device 5, hence, the heat is stored in the high-temperature heat storage device 5. The superheated steam after heat exchange in the high-temperature heat storage device 5 flows through the second steam return line L13 and is introduced into the first heat exchanger 40, and the water flowing through the low-temperature heat storage device 4 is heated in the first heat exchanger 40. At this time, the superheated steam is returned into water in the first heat exchanger 40 and pressurized by the pressurization pump 18, and then fed to the low-temperature heat collection device 1.

The change in the fluid temperatures of the low-temperature heat storage device 4 and the high-temperature heat storage device 5 in the second embodiment is the same as that of the first embodiment, and the fluid in each of the heat storage devices is a single phase flow. Therefore, the second embodiment also elicits similar effects to those of the first embodiment.

### Third Embodiment

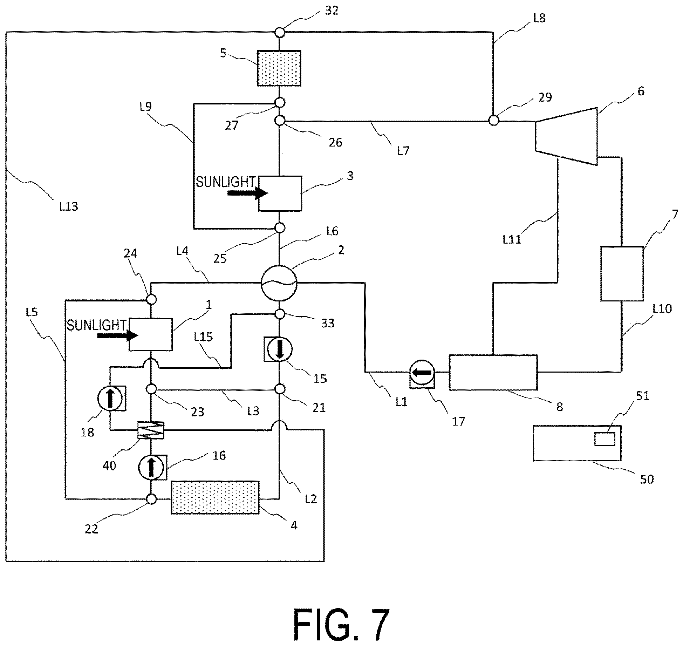

FIG. 7 is a configuration diagram of a solar thermal power generation plant according to a third embodiment of the present invention. The third embodiment illustrated in FIG. 7 is different from the second embodiment in that there is further provided a second condensed water feed line L15 that pressurizes, by using the pressurization pump 18, water, which flows from the high-temperature heat storage device 5 through the second steam return line L13 and which is condensed through heat exchange with the water flowing through the low-temperature heat storage device 4 by the first heat exchanger 40,, and feeds the pressurized water to the inlet-side of the circulation pump 15 via a three-way valve 33.

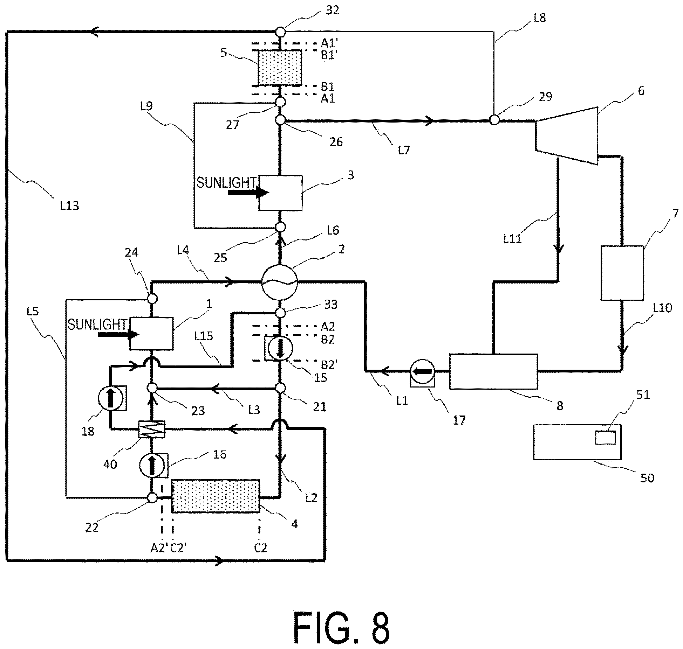

Next, the operation mode of the solar thermal power generation plant according to the third embodiment will be described. However, the operation mode in this embodiment is the substantially same as the operation of the second embodiment and thus, only the operations different from those of the second embodiment in the heat storage operation mode will be described below. FIG. 8 is an explanatory diagram illustrating the operation of the heat storage operation mode of the solar thermal power generation plant according to the third embodiment. Note that in FIG. 8, lines in which the fluid flows are thicker, and arrows on the lines indicate the flow direction of the fluid.

As illustrated in FIG. 8, the superheated steam after heat exchange in the high-temperature heat storage device 5 flows through the second steam return line L13 and is introduced into the first heat exchanger 40. The water flowing through the low-temperature heat storage device 4 is heated in the first heat exchanger 40. At this time, the superheated steam is converted into water in the first heat exchanger 40 and pressurized by the pressurization pump 18. Then, the pressurized water flows through the second condensed water feed line L15, and is fed to the inlet-side of the circulation pump 15.

The change in the fluid temperatures of the low-temperature heat storage device 4 and the high-temperature heat storage device 5 in the third embodiment is the same as that of the first embodiment, and the fluid in each of the heat storage devices is a single phase flow. Therefore, the third embodiment also elicits similar effects to those of the first embodiment.

### Fourth Embodiment

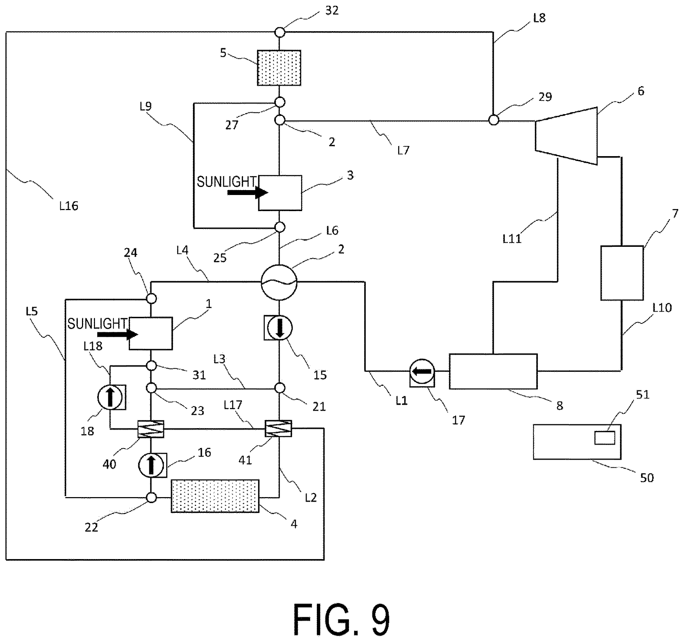

FIG. 9 is a configuration diagram of a solar thermal power generation plant according to a fourth embodiment of the present invention. The fourth embodiment illustrated in FIG. 9 is different from the second embodiment in that a second heat exchanger 41 is provided between the circulation pump 15 in the first hot water line L2 and the low-temperature heat storage device 4, and superheated steam from the high-temperature heat storage device 5 is first introduced into the second heat exchanger 41 via a third steam return line L16.

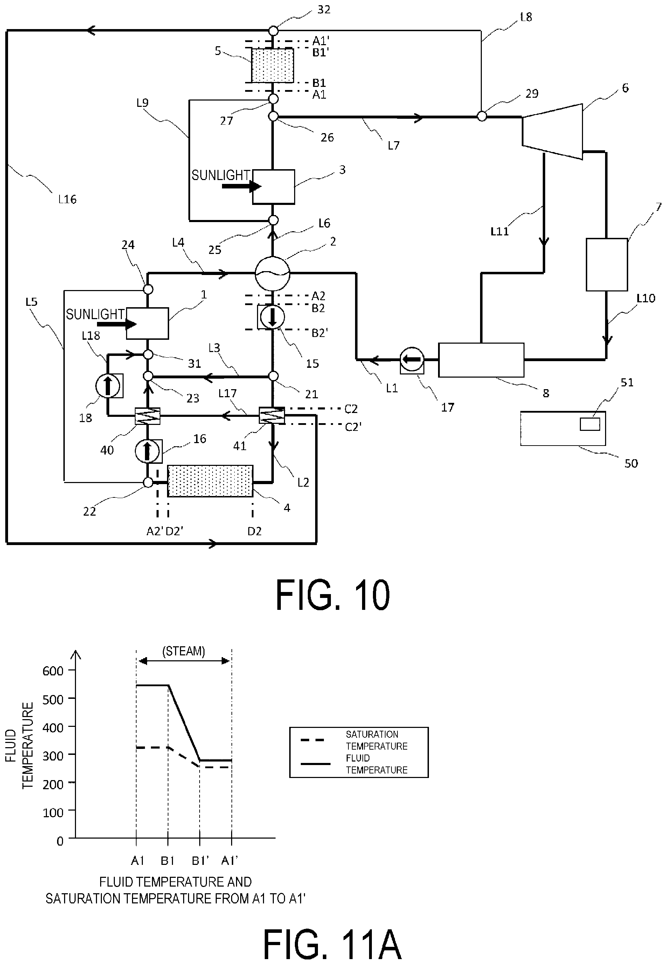

Next, the operation mode of the solar thermal power generation plant according to the fourth embodiment will be described. However, the operation mode in this embodiment is the substantially same as that of the second embodiment and thus, only the operations different from those of the second embodiment in the heat storage operation mode will be described below. FIG. 10 is an explanatory diagram of the operation of the heat storage operation mode of the solar thermal power generation plant according to the fourth embodiment. Note that in FIG. 10, lines in which the fluid flows are thicker, and arrows on the lines indicate the flow direction of the fluid.

As illustrated in FIG. 10, the superheated steam after heat exchange in the high-temperature heat storage device 5 flows through the third steam return line L16, is first introduced into the second heat exchanger 41, and the water flowing from the circulation pump 15 toward the low-temperature heat storage device 4 is heated in the second heat exchanger 41. Further, steam after heat exchange in the second heat exchanger 41 is introduced into the first heat exchanger 40 via a fourth steam return line L17, and the water flowing through the low-temperature heat storage device 4 is heated in the first heat exchanger 40. In this manner, the superheated steam from the high-temperature heat storage device 5 flows through the second heat exchanger 41 and the first heat exchanger 40 in order and condensed. After pressurized by the pressurization pump 18, the condensed water flows through a third condensed water feed line L18, and is fed to the low-temperature heat collection device 1.

Next, the fluid temperatures of the low-temperature heat storage device 4 and the high-temperature heat storage device 5 in the heat storage operation mode will be described. FIG. 11A is a diagram illustrating the fluid temperatures of the high-temperature heat storage device 5, and FIG. 11B is a diagram illustrating the fluid temperatures of the circulation pump 15, the second heat exchanger 41, and the low-temperature heat storage device 4. Note that A1, B1, C2 and the like illustrated in the horizontal axes in FIG. 11A and FIG. 11B correspond to positions of A1, B1, C2 and the like in FIG. 10, dotted lines in FIGS. 11A and 11B represent the saturation temperatures and solid lines represent the fluid temperatures. Note that in FIG. 11A and FIG. 11B, a pressure loss of piping connecting apparatuses is ignored.

As illustrated in FIG. 11A, from the position B1 to B1', the fluid temperature of the superheated steam flowing in the tube of the high-temperature heat storage device 5 decreases, because heat is deprived by the heat storage medium of the high-temperature heat storage device 5. However, the saturation temperature also decreases simultaneously, whereby a state in which the fluid temperature is higher than the saturation temperature is kept. Therefore, the fluid remains as steam from the position A1 on the inlet-side to the position A1' on the outlet-side of the high-temperature heat storage device 5. That is, the fluid in the high-temperature heat storage device 5 is a single phase flow.

On the other hand, as illustrated in FIG. 11B, on the side of the low-temperature heat storage device 4, from the position B2 to the position B2', water from the steam separator 2 is pressurized by the circulation pump 15, and, accordingly, the saturation temperature increases. From the position C2 to position C2', which are an inlet and an outlet of the second heat exchanger 41, the temperature of water flowing in the tube increases due to heating, but is maintained to be lower than the saturation temperature. Then, the water heated in the second heat exchanger 41 is fed to the inlet of the low-temperature heat storage device 4, and from the position D2 to the position D2', heat is deprived by the heat storage medium of the low-temperature heat storage device 4. As a result, from the position D2 to the position D2', the fluid temperature decreases. While the saturation temperature also decreases due to the pressure loss of the low-temperature heat storage device 4, the fluid temperature is maintained to be lower than the saturation temperature at all times, hence, the fluid remains as water. That is, the fluid in the low-temperature heat storage device 4 is a single phase flow.

Therefore, in the fourth embodiment as well, since the fluid flowing in the piping of the low-temperature heat storage device 4 and the high-temperature heat storage device 5 can be prevented from becoming a water-steam two phase flow, the same effects as those of the first embodiment can be elicited. In addition, in the fourth embodiment, a higher temperature can be stored in the low-temperature heat storage device 4 than in the first to third embodiments, in proportion to an amount of heating water by the second heat exchanger 41. That is, the temperature range of heat that can be stored in the low-temperature heat storage device 4 can be advantageously enlarged.

Note that the present invention is not limited to the embodiments described above, and include various modifications. For example, the embodiments described above are described in detail for the purpose of clearly describing the present invention, and are not necessarily limited to those provided with all the above-mentioned components.

### Reference Signs List

1 Low-temperature heat collection device
2 Steam separator
3 High-temperature heat collection device
4 Low-temperature heat storage device
5 High-temperature heat storage device
6 Steam turbine
7 Condenser
8 Feed water heater
15 Circulation pump
16 Pump
17 Feed water pump
18 Pressurization pump
21 to 33 Three-way valve
40 First heat exchanger
41 Second heat exchanger
50 Controller
L1 Feed water line
L2 First hot water line
L3 Second hot water line
L4 Water-steam line
L5 Low-temperature bypass line
L6 Saturated steam line
L7 First main steam line
L8 Second main steam line
L9 High-temperature bypass line
L10 Condensation line
L11 Steam extraction line
L12 First steam return line
L13 Second steam return line
L14 First condensed water feed line
L15 Second condensed water feed line
L16 Third steam return line
L17 Fourth steam return line
L18 Third condensed water feed line

## Claims

1. A solar thermal power generation system comprising:
a low-temperature heat collection device configured to heat water with heat of sunlight thereby generating water-steam two phase fluid;
a steam separator configured to separate the water-steam two phase fluid, which has been generated by the low-temperature heat collection device, into water and steam;
a first hot water line configured to connect the steam separator to the low-temperature heat collection device, and feed the water separated by the steam separator to the low-temperature heat collection device;
a low-temperature heat storage device provided in the first hot water line, and configured to store heat acquired through heat exchange with the water separated by the steam separator;
a high-temperature heat collection device configured to heat the steam separated by the steam separator with heat of sunlight thereby generating superheated steam;
a steam turbine;
a first main steam line configured to connect the high-temperature heat collection device to the steam turbine, and feed the superheated steam generated by the high-temperature heat collection device to the steam turbine;
a second main steam line branching from the first main steam line and joining with the first main steam line;
a high-temperature heat storage device provided in the second main steam line, and configured to store heat acquired through heat exchange with the superheated steam generated by the high-temperature heat collection device;
a low-temperature bypass line configured to bypass the low-temperature heat collection device, and connect an outlet-side of the low-temperature heat storage device to a water-steam two phase fluid inlet-side of the steam separator; and
a high-temperature bypass line configured to bypass the high-temperature heat collection device, and connect a steam outlet-side of the steam separator to an inlet-side of the high-temperature heat storage device.

2. The solar thermal power generation system according to claim 1, further comprising:
a feed water pump configured to feed water to the steam separator;
a feed water heater provided upstream of the feed water pump, and configured to heat water to be fed to the feed water pump;
a second hot water line branching from the first hot water line, and configured to bypass the low-temperature heat collection device and feed the water separated by the steam separator to the low-temperature heat storage device;
a circulation pump provided in the first hot water line, and configured to feed the water separated by the steam separator to the low-temperature heat collection device and the low-temperature heat storage device;
a steam extraction line configured to connect a steam extraction side of the steam turbine to the feed water heater; and
a first steam return line branching the second main steam line at an outlet-side of the high-temperature heat storage device in and joining with the steam extraction line.

3. The solar thermal power generation system according to claim 2, further comprising a controller configured to control operation in a plurality of operation modes, wherein
the plurality of operational modes includes:
a heat storage operation mode in which, by opening the first hot water line and the second hot water line and closing the low-temperature bypass line, the water-steam two phase fluid is generated by the low-temperature heat collection device while storing heat of the water separated by the steam separator in the low-temperature heat storage device, and the generated water-steam two phase fluid is fed to the steam separator, and by opening the first main steam line, closing an outlet-side of the high-temperature heat storage device in the second main steam line, opening the first steam return line, and closing the high-temperature bypass line, superheated steam generated by the high-temperature heat collection device is fed to the steam turbine while storing heat of the superheated steam generated by the high-temperature heat collection device in the high-temperature heat storage device; and
a heat release operation mode in which, by opening the first hot water line, closing the second hot water line, and opening the low-temperature bypass line, a water-steam two phase fluid is generated by heating in the low-temperature heat storage device the water separated by the steam separator, and the generated water-steam two phase fluid is fed to the steam separator via the low-temperature bypass line, and by closing the first main steam line, opening the second main steam line, opening the high-temperature bypass line, and closing the first steam return line, superheated steam is generated by heating in the high-temperature heat storage device the steam fed from the steam separator to the high-temperature heat storage device via the high-temperature bypass line, and the generated superheated steam is fed to the steam turbine via the second main steam line.

4. The solar thermal power generation system according to claim 1, further comprising:
a feed water pump configured to feed water to the steam separator;
a first heat exchanger provided in the first hot water line between an outlet of the low-temperature heat storage device and an inlet of the low-temperature heat collection device;
a second hot water line branching from the first hot water line, and configured to bypass the low-temperature heat storage device and feed water separated by the steam separator to the low-temperature heat collection device;
a circulation pump provided in the first hot water line, and configured to feed the water separated by the steam separator to the low-temperature heat collection device and the low-temperature heat storage device;
a second steam return line branching from the second main steam line at an outlet-side of the high-temperature heat storage device and returning to the first heat exchanger; and
a first condensed water feed line configured to condense at the first heat exchanger the superheated steam returned from the high-temperature heat storage device to the first heat exchanger via the second steam return line, and feed the condensed water to the low-temperature heat collection device.

5. The solar thermal power generation system according to claim 1, further comprising:
a feed water pump configured to feed water to the steam separator;
a first heat exchanger provided in the first hot water line between an outlet of the low-temperature heat storage device and an inlet of the low-temperature heat collection device;
a second hot water line branching from the first hot water line, and configured to bypass the low-temperature heat storage device and feed water separated by the steam separator to the low-temperature heat collection device;
a circulation pump provided in the first hot water line, and configured to feed the water separated by the steam separator to the low-temperature heat collection device and the low-temperature heat storage device;
a second steam return line branching from the second main steam line at an outlet-side of the high-temperature heat storage device and returning to the first heat exchanger; and
a second condensed water feed line configured to condense by the first heat exchanger the superheated steam returned from the high-temperature heat storage device to the first heat exchanger via the second steam return line, and feed the condensed water to an inlet-side of the circulation pump.

6. The solar thermal power generation system according to claim 1, further comprising:
a feed water pump configured to feed water to the steam separator;
a first heat exchanger provided in the first hot water line between an outlet of the low-temperature heat storage device and an inlet of the low-temperature heat collection device;
a second hot water line branching from the first hot water line, and configured to bypass the low-temperature heat storage device and feed water separated by the steam separator to the low-temperature heat collection device;
a circulation pump provided in the first hot water line, and configured to feed the water separated by the steam separator to the low-temperature heat collection device and the low-temperature heat storage device;
a second heat exchanger provided in the first hot water line between the circulation pump and an inlet of the low-temperature heat storage device;
a third steam return line branching from the second main steam line at an outlet-side of the high-temperature heat storage device and returning to the second heat exchanger;
a fourth steam return line configured to exchange heat with superheated steam returned from the high-temperature heat storage device to the second heat exchanger via the third steam return line by the second heat exchanger, and feed the superheated steam to the first heat exchanger; and
a third condensed water feed line configured to condense by the first heat exchanger steam fed from the fourth steam return line and feed the condensed water to the low-temperature heat collection device.
